# EUROPEAN PATENT APPLICATION

(11) **EP 3 089 038 A1**
(43) Date of publication of application: **02.11.2016**
(21) Application number: 14873593.9
(22) Date of filing: 25.12.2014
(51) Int. Cl.: G06F 12/00, G06F 13/00

(54) **CASH MANAGEMENT DEVICE, CASH MANAGEMENT METHOD, AND PROGRAM**

(30) Priority: 25.12.2013 JP 2013266917
(71) Applicant: NEC Corporation, Tokyo 108-8001 (JP)
(72) Inventor: SUMIYOSHI Yasuaki, Tokyo 108-8001 (JP)
(74) Representative: Betten & Resch
(86) International application number: PCT/JP2014/084258
(87) International publication number: WO 2015/099018

(57) **Abstract**

A cash management device includes: a latest access list acquisition unit that acquires a latest access list showing a history of a Web content accessed within a predetermined period of past for which present is set as a reference; and a deletion target determination unit that determines a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data. The deletion target determination unit specifies a Web content whose access frequency is lower than a lower limit reference for each of a plurality of different periods, and selects the deletion target Web content from the specified Web content.

## Description

### TECHNICAL FIELD

The present invention relates to a cash management device, a cash management method, and a program.

### BACKGROUND ART

A plurality of distribution server (cash server) devices are arranged between server devices providing Web contents and user terminal devices in the Internet, with the framework of providing Web content from those distribution server devices called a CDN (Contents Delivery Network). In a CDN, access from users is decentralized, whereby the load on each server device and on the network is reduced.

An operator that provides this kind of CDN as a service decides in advance which Web contents are to be cashed with content providers, and in some cases accumulates the those Web contents in a distribution server device.

There are capacity limits in a storage device that a distribution server device has built in or that is connected to a distribution server device. For this reason, it is not realistic to cash all Web contents in distribution server devices. It is common to manage Web contents accumulated in a distribution server device by the storage capacity of the storage device and the last access time to the Web contents. For example, there is a method in which, in the case of the data size of accumulated data having exceeded an upper limit value set in advance, deletion is carried out in sequence from the oldest content in terms of last access date to create available capacity, and new Web contents that was newly accessed are accumulated in that available capacity (refer to Patent Document 1).

Next will be considered a Web contents cash function provided at a gateway on a network and a distribution server device provided in the vicinity of a gateway by communications carrier providing a communication network. For example, the aim of a contents provider using a cash function is to obtain a business chance by enabling users accessing the operator's Web contents to comfortably access specified contents that the company provides, and to prevent downtime arising from the concentration of loads on contents providing server devices of the company. In contrast, the aim of a communications carrier using a cash function differs from that of a contents provider. A communications carrier introduces a distribution server device (cash function) with the aim of cutting wasteful communication to prevent saturation of the band of the communication network that the firm provides and drops in communication speed. The communications carrier may not handle only specified contents in the manner of a content providing operator and a CDN server providing operator, but must handle all contents accessed from users. A communications carrier, by using a cash function, expects to improve the band utilization efficiency of the communication network it provides for all the Web contents on the Internet. For example, if only the Web contents with a low access rate are accumulated, it may result in the traffic due to access to Web contents with a high access rate increasing, putting pressure on communication lines. On the other hand, if it is possible to accumulate only Web content with a high access rate, the traffic due to access to that Web content is confined to just between the distribution server device and user terminal devices, and so there is a possibility of being able to enhance the band utilization efficiency of the communication network. That is, the target of a communications carrier is to accumulate only Web contents with as high an access rate as possible in a limited memory capacity, in an environment in which the targeted Web contents and devices that come to access cannot be restricted in advance.

### [Prior Art Documents]

### [Patent Document]

[Patent Document 1] Japanese Unexamined Patent Application, First Publication No. 2006-185169

### SUMMARY OF THE INVENTION

### Problem to be Solved by the Invention

The problems in the case of applying the method of managing cash data accumulated by the method of Patent Document 1 to a distribution server device of a communication carrier will be described.
(1) By the method of Patent Document 1, when the capacity restriction is exceeded, deletion is carried out sequentially from contents whose access time is old. In this case, it can be said that, since contents with an old access time have not been accessed from the time of that access until now, the access rate in relation to that period was low. However, even if Web contents are cashed simply because they were newly accessed, it is impossible to predict how much access there will henceforth be to those Web contents, and there is a possibility they will be deleted from the distribution server device without being accessed again. In contrast, there may have been access of a certain amount or more in the period until being accessed last, and periodic access of a certain amount or more to Web contents that have previously been deleted for the reason of being old. In that case, when deleted from the cash, traffic in accordance with the number of accesses will occur again. That is, deleting cash data just because its last access time is old is not necessarily appropriate from the standpoint of band utilization efficiency of a communication network.
(2) Even if cash generation is performed and it is saved for sites in which explosive access momentarily occurs such as campaign sites, the occurrence of that explosive access will not continue. Therefore, cashing is wasteful when there is no subsequent access, while cash data of Web content having some access comes to be deleted for that cash storage, leading to a drop in the cash management efficiency.

That is, if Web contents are cashed simply because they have been newly accessed, it is not necessarily suitable from the standpoint of improving the usage rate of the communication network.

An exemplary object of the present invention is to provide a cash management device, a cash management method, and a program that solve the aforementioned issues.

### Means for Solving the Problem

The present invention has been achieved to solve the aforementioned issues. A cash management device according to an exemplary aspect of the present invention includes: a latest access list acquisition unit that acquires a latest access list showing a history of a Web content accessed within a predetermined period of past for which present is set as a reference; and a deletion target determination unit that determines a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data. The deletion target determination unit specifies a Web content whose access frequency is lower than a lower limit reference for each of a plurality of different periods, and selects the deletion target Web content from the specified Web content.

A cash management method according to an exemplary aspect of the present invention includes: acquiring a latest access list showing a history of a Web content accessed within a predetermined period of past for which present is set as a reference; and determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data. The determining the deletion target list includes specifying a Web content whose access frequency is lower than a lower limit reference for each of a plurality of different periods, and selecting the deletion target Web content from the specified Web content.

A program according to an exemplary aspect of the present invention causes a computer of a cash management device to execute: acquiring a latest access list showing a history of a Web content accessed within a predetermined period of past for which present is set as a reference; and determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data. The determining the deletion target list includes specifying a Web content whose access frequency is lower than a lower limit reference for each of a plurality of different periods, and selecting the deletion target Web content from the specified Web content.

### Effect of the Invention

According to the present invention, it is possible to accumulate cash data of Web contents with a high hit rate in a limited storage capacity.

### BRIEF DESCRIPTION OF THE DRAWINGS

FIG. 1 is a diagram showing a constitution of a cash management device according to a first exemplary embodiment of the present invention.
FIG. 2 is a diagram showing a specific constitution of the cash management device according to the first exemplary embodiment of the present invention.
FIG. 3 is a diagram showing an outline of a network system including the cash management device according to the first exemplary embodiment of the present invention.
FIG. 4 is a diagram showing the processing flow of the cash management device according to the first exemplary embodiment of the present invention.
FIG. 5A is a diagram showing an example of a 24H list created by the cash management device according to the first exemplary embodiment of the present invention.
FIG. 5B is a diagram showing an example of a 7DAYS list created by the cash management device according to the first exemplary embodiment of the present invention.
FIG. 5C is a diagram showing an example of a 4WEEK list created by the cash management device according to the first exemplary embodiment of the present invention.

### EMBODIMENTS FOR CARRYING OUT THE INVENTION

### (First Exemplary Embodiment)

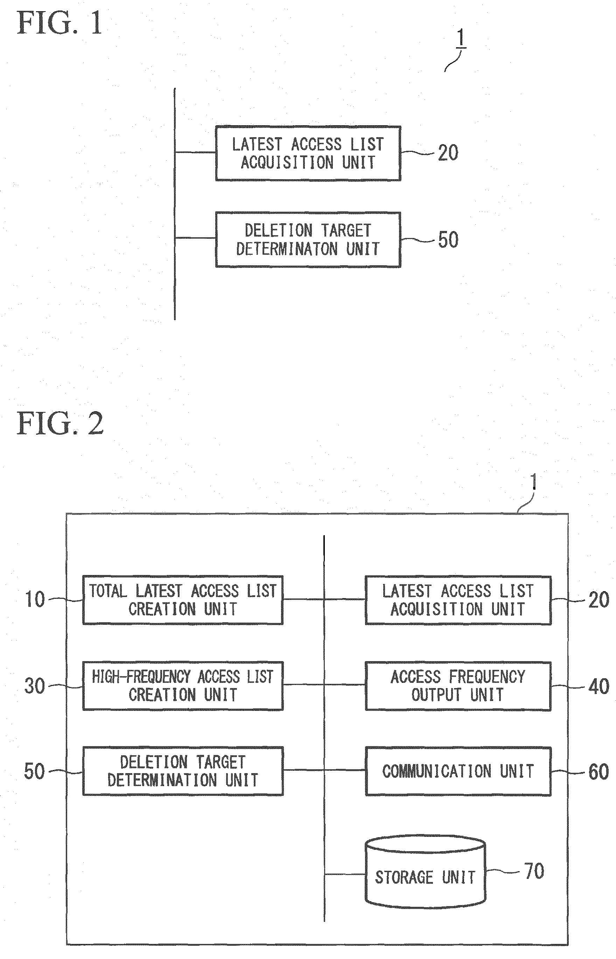

Hereinbelow, a cash management device according to a first exemplary embodiment of the present invention will be described referring to FIG. 1 to FIG. 5C.

FIG. 1 shows the constitution of a cash management device according to the first exemplary embodiment.

FIG. 1 shows the cash management device 1. As shown in FIG. 1, the cash management device 1 includes at least a latest access list acquisition unit 20 and a deletion target determination unit 50. The cash management device 1 is a device that manages Web contents that a distribution server (cash server) device cashes.

The latest access list acquisition unit 20 acquires a "latest access list" showing Web contents accessed a predetermined number of times or greater during a predetermined period from a history of Web contents a user has requested ("total latest access list").

The deletion target determination unit 50 determines the Web contents to be deleted from the present cash data in order to secure storage space for cashing new Web content.

The deletion target determination unit 50 specifies, for each of a plurality of periods of different lengths in the past, Web contents whose access frequency is low with respect to Web contents already cashed, and determines that Web contents to be deletion targets. Note that the plurality of periods of different lengths in the past are for example the past 24 hours, the past seven days, and the past four weeks.

FIG. 2 is a diagram showing the specific constitution of a cash management device according to the first exemplary embodiment. Referring to FIG. 2, function units other than the latest access list acquisition unit 20 and the deletion target determination unit 50 constituting the cash management device 1 will be described.

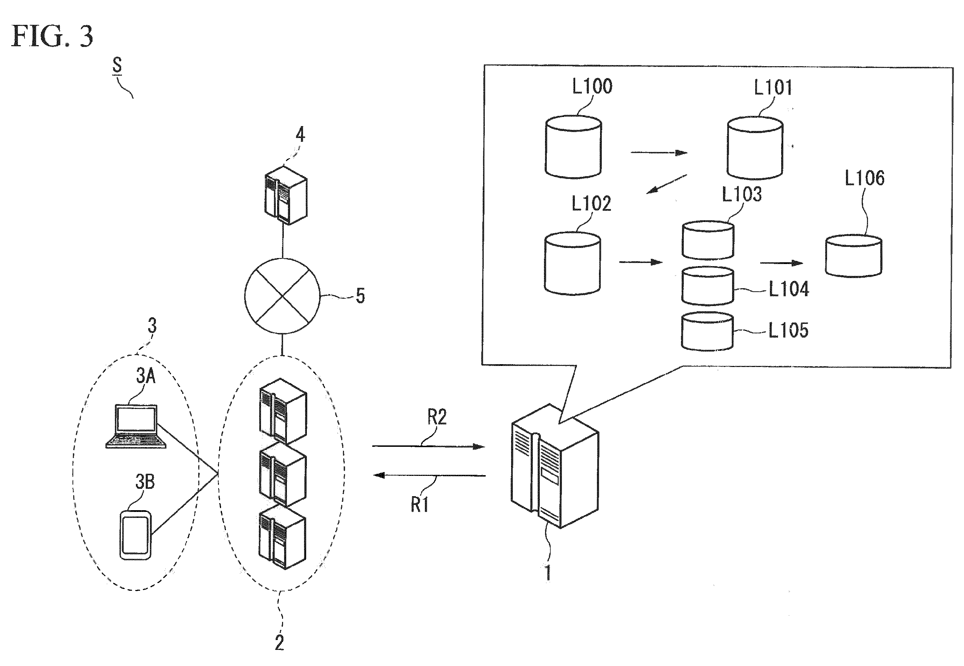

A total latest access list creation unit 10 creates a total latest access list based on access information to Web contents received from the distribution server device 2 (refer to FIG. 3). Web content identification information, the number of access times to that Web content identification information within a predetermined time, and the like are recorded in the total latest access list. Here, the predetermined time is for example 10 minutes or 1 hour. Web content identification information includes for example the URL of the access destination including the query, partial information constituting the access destination Web content, and key information generated by hashing based on user terminal information and the like of the access source.

The reason that partial information constituting the access destination Web contents is included in the Web content identification information is that there are times when there is a change in the Web contents even when the access destination URL is the same, and there is a need to distinguish between the case prior to the contents being changed and the case after the contents are changed. The reason for including user termination information in the Web content identification information is that even for Web contents of the same access destination, there are for example situations in which the Web contents sent back differ between the case of being accessed from a mobile terminal and the case of being accessed from a PC terminal.

It is assumed that information required for the Web content identification information and the information of the data size of the Web contents are included in the access information received from the distribution server device 2.

Hereinbelow, Web contents refer to Web contents that the Web content identification information shows.

A high-frequency access list creation unit 30 creates a "high-frequency access list" that accumulates information of a "latest access list" denoting Web contents whose most recent access frequency was high among accesses by users. The contents denoted by the Web content identification information recorded in the "high frequency access list" are accumulated in the storage unit of the distribution server device 2. When the high-frequency access list creation unit 30 adds the information of the "latest access list" to the "high-frequency access list," the "high-frequency access list" increases. Accordingly, the volume of the Web contents accumulated in the storage unit of the distribution server device 2 increases, and before long it exceeds the storage capacity of the storage unit provided in the distribution server device 2. Accordingly, the high-frequency access list creation unit 30 deletes from the "high-frequency access list" Web content identification information denoting the contents to be removed from the cash target in accordance with the determination of the deletion target determination unit 50 described previously. Information such as Web content identification information, past access history, last access date and time and the like are included in the "high-frequency access list." The past access history is the number of accesses per day in the past four weeks or the times of all the accesses, for example.

An access frequency output unit 40 outputs an "access frequency list" for a plurality of periods on the basis of the past access history information in the "high-frequency access list." For example, the access frequency output unit 40 creates a list in the order of high frequency of access over the past 24 hours, a list in the order of high frequency of access over the past seven days, and a list in the order of high frequency of access over the past four weeks, for each Web content identification information. As another method, the access frequency output unit 40 may sum up for each day of the week the number of access times over the past seven days and four weeks. The deletion target determination unit 50 determines the deletion target cash data in accordance with access trend information that the access frequency output unit 40 generates.

A communication unit 60 receives the Web content identification information for the Web contents that the user requested, from the distribution server device 2. Moreover, the communication unit 60 transmits information specifying the Web contents that should be accumulated in the distribution server device 2 or should be deleted from the distribution server device 2.

A storage unit 70 stores the high-frequency access list and the latest access list.

The total latest access list creation unit 10, the latest access list acquisition unit 20, the high-frequency access list creation unit 30, the access frequency output unit 40, and the deletion target determination unit 50 are functions provided in the cash management device 1 by the CPU (Central Processing Unit) provided in the cash management device 1 executing programs.

FIG. 3 shows an outline of a network system S including the cash management device 1 according to the first exemplary embodiment.

Referring to FIG. 3, an outline of the network system S will be described.

The network system S includes the cash management device 1, the distribution server device 2, a user terminal device 3, a content providing source server device 4, and a communication network 5. The distribution server device 2 transmits access information to the cash management device 1, and makes a query to the cash management device 1 (refer to arrow R1). The cash management device 1 instructs addition or deletion of a cash to the distribution server device 2 (refer to arrow R2). In the example shown in FIG. 3, the user terminal device 3 includes a computer terminal 3A and a mobile terminal 3B.

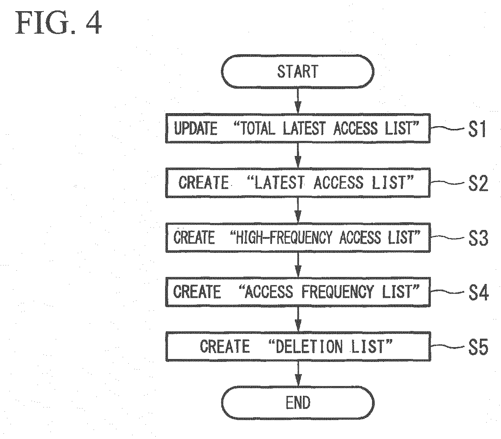

The types of lists that each function unit generates in the cash management device 1 will be described. The list types include a total latest access list L100, a latest access list L101, a high-frequency access list L102, a 7DAYS list L104, a 4WEEK list L105, and a deletion list L106. The method of preparing these lists will be described later using FIG. 4.

The total latest access list L100 is a list in which the total latest access list creation unit 10 has recorded the access number for all Web contents that have been accessed within a predetermined time.

The total latest access list L100 is created based on the access information that the distribution server device 2 sends.

The latest access list L101 is a list generated by the latest access list acquisition unit 20 selecting Web contents whose number of times of access is equal to or greater than a predetermined number of times from among the total latest access list L100.

The high-frequency access list L102 is a list created by the high-frequency access list creation unit 30 and denotes the Web contents targeted for cashing in the distribution server device 2. The distribution server device 2 queries the cash management device 1 as to which contents should be cashed. Referring to the high-frequency access list L102, the cash management device 1 instructs which contents should be cashed and/or which contents should not be cashed.

The 24H list L103 is a list of access numbers in the period of the past 24 hours. The 7DAYS list L104 is a list of access numbers in the period of the past seven days. The 4WEEK list L105 is a list of access numbers in the period of the past four weeks. The 24H list L103, the 7DAYS list L104, and the 4WEEK list L105 are lists that the access frequency output unit 40 has created and output on the basis of the high-frequency access list L102.

The deletion list L106 is a list, determined by the deletion target determination unit 50 on the basis of the 24H list L103, the 7DAYS list L104, and the 4WEEK list L105, that denotes which contents of cash data that are presently accumulated should be deleted. The cash management device 1 instructs the distribution server device 2 to delete cash data on the basis of the deletion list L106.

Next, the operation in the network system S of FIG. 3 will be described.

The distribution server device 2 receives requests to access Web contents from the user terminal device 3. If the distribution server device 2 has already cashed the requested Web contents, it reads out the Web contents from the storage unit included therein and transmits a response (the Web contents) of the read-out Web contents to the user terminal device 3. If the distribution server device 2 has not cashed the Web contents, it accesses the content providing source server device 4 to acquire the contents, and transmits a response (the Web contents) to the user terminal device 3.

The distribution server device 2, in addition to transmitting a response (access information) to the user terminal device 3, creates access information from requests received from the user terminal device 3 and the Web contents transmitted to the user terminal device 3, and transmits that access information to the cash management device 1. The distribution server device 2, in the case of not cashing the requested Web contents, queries the cash management device 1 whether or not it should cash that Web contents.

If the Web content identification information corresponding to the queried Web contents is recorded in the high-frequency access list L102, the cash management device 1 transmits instruction information that instructs to cash those contents via the communication unit 60 to the distribution server device 2. If the Web content identification information corresponding to the queried Web contents has not been recorded in the high-frequency access list L102, the cash management device 1 transmits instruction information that instructs not to cash that content via the communication unit 60 to the distribution server device 2.

The distribution server device 2, in the case of having received instruction information instructing it to cash contents, cashes the Web contents in accordance with that instruction information.

The content of the high-frequency access list L102 changes at every predetermined time due to the content of the latest access list L101 being added and the content of the deletion list L106 being deleted. Therefore, there is a possibility that the instruction of whether or not to cash that the cash management device 1 performs with respect to a query from the distribution server device 2 will change at every predetermined time. Thereby, the distribution server device 2 can cash Web contents in accordance with the latest access trend.

When the content of the high-frequency access list changes, the cash management device 1 transmits to the distribution server device 2 via the communication unit 60 information denoting the Web contents that should be deleted from the cash data recorded in the deletion list L106. As will later be described referring to FIG. 4, the total of the data size of the Web contents that the deletion list L106 denotes is at least equal to or greater than the total of the data size of the contents that the distribution server device 2 newly cashes.

The distribution server device 2, upon receiving deletion instruction information, deletes the data of the specified Web contents from the cash data that has previously been accumulated in accordance with that instruction. Thereby, it is possible to prevent the data size of the cash data from going over the capacity of the storage device of the distribution server device 2.

In this manner, the cash management device 1 performs selection and management of the cash target so as raise the hit rate of cash data that the distribution server device 2 accumulates. As a result, by keeping communication due to requests from users between the user terminal device 3 and the distribution server device 2, it is possible to reduce the data amount flowing through the communication network 5, secure the band of the communication network 5 and prevent a drop in the communication speed.

FIG. 4 shows the processing flow of the cash management device according to the present exemplary embodiment.

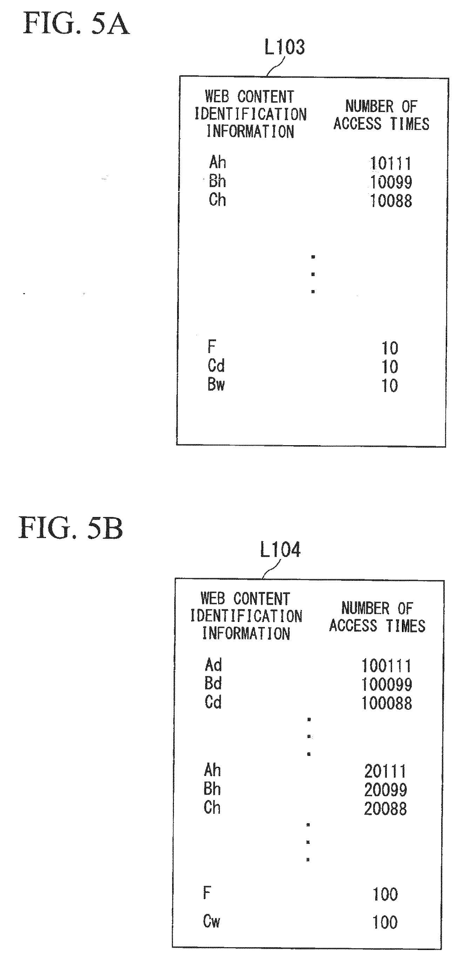

FIGS. 5A to 5C show examples of lists that the cash management device according to the present exemplary embodiment has prepared.

Referring to the processing flow shown in FIG. 4, the process in which the cash management device 1 prepares the aforementioned lists L100 to L106 will be described.

First, as described above referring to FIG. 3, when there is a request for Web contents from a user, the distribution server device 2 transmits access information about that request to the cash management device 1. The data size of the Web contents is included in that access information.

### (Step S1: "Total latest access list" update process)

In the cash management device 1, the total latest access list creation unit 10 creates Web content identification information using access information. The total latest access list creation unit 10 reads out the total latest access list L100 from the storage unit 70, and judges whether or not the created Web content identification information exists in the present total latest access list L100. In the case of having judged that the Web content identification information exists, the total latest access list creation unit 10 adds "1" to the value of the number of access times of that Web content identification information in the total latest access list L100. In the case of having judged that the Web content identification information does not exist, the total latest access list creation unit 10 newly registers that Web content identification information in the total latest access list L100 and records the value of its number of access times as "1." When the total latest access list creation unit 10 updates the number of access times of the Web content identification information, it stores the total latest access list L100 in the storage unit 70. Also, the total latest access list creation unit 10 records the data size and the last access time of the received contents in the total latest access list L100 in association with the Web content identification information.

### (Step S2: "Latest access list" creation process)

Next, at every predetermined time, the latest access list acquisition unit 20 reads out the total latest access list L100 from the storage unit 70 and extracts the Web content identification information that has been accessed a predetermined number of times or more in a predetermined time. The predetermined time may for example be 10 minutes or around 1 hour. The predetermined time may be set in accordance with the access number or the traffic state of the communication network or the like. The latest access list acquisition unit 20 records the extracted Web content identification information in the storage unit 70. This recorded information is the latest access list L101.

The latest access list acquisition unit 20 selects the cash targets on the basis of the access frequency. As a result, it is possible to reduce the possibility of all the contents that have been newly accessed being set to be cashed, at the cost of cash data expected to have access of to some extent a high frequency being deleted. For example, by not adding to a cash target if the access number in one hour (a predetermined time) is not equal to or greater than a predetermined number even if there are many accesses temporarily, it is possible to prevent the creation of meaningless cash data and a drop in the cash management effectiveness.

### (Step S3: "High-frequency access list" creation process)

When the latest access list acquisition unit 20 creates the latest access list L101, the high-frequency access list creation unit 30 at that timing updates the high-frequency access list L102 using the information of the latest access list L101. The case of a Web content identification information that has been registered in the latest access list L101 already being listed in the high-frequency access list L102 will be described. In this case, the high-frequency access list creation unit 30 updates the last access time, and updates (adds) the number access times. The case of a Web content identification information registered in the latest access list L101 not being a Web content identification information not in the high-frequency access list L102 will be described. In this case, the high-frequency access list creation unit 30 newly registers that identification information in the high-frequency access list L102.

Also, the high-frequency access list creation unit 30 acquires, from the latest access list L101, the data size of all of the Web contents newly added to the high-frequency access list L102 among the latest access list L101 and calculates the total. This total value is the capacity of the storage device that is required in the case of cashing in the distribution server device 2 the Web contents newly added to the high-frequency access list L102. The high-frequency access list creation unit 30 records this total value in the storage unit 70.

The high-frequency access list L102 denotes the Web contents that the distribution server device 2 cashes. By extracting and making a target for cashing only those Web contents with a high access frequency that were totaled for each relatively short time interval such as 10 minutes or one hour, it is possible to prevent the band of the communication network from being occupied by traffic due to access to the same Web contents.

Thus far, the procedure of adding only contents with a high access frequency to the cash target has been described. While there is leeway in the capacity of the storage device that the distribution server device 2 includes, it is sufficient to add the content of the latest access list L101 to the high-frequency access list L102. However, there is a limit to the capacity of the cash contents that the distribution server device 2 can accumulate. For this reason, it is necessary to delete cash contents having a data size corresponding to the data size of the newly added Web contents from the distribution server device 2. Generally in the Internet, access concentrates on some Web contents. For this reason, the hit rate greatly differs whether or not it is possible to cash Web contents with a high access frequency. Accordingly, deletion of cash data is performed so that Web content with a high access rate remains.

### (Step S4: "Access frequency list" creation process)

When Web contents to be added to the high-frequency access list L102 is determined, next, the access frequency output unit 40 creates an access frequency list that becomes an index for judging what cash contents should be deleted. The access frequency output unit 40 creates an access frequency list for each of the plurality of differing periods. The access frequency lists are for example the 24H list L103, the 7DAYS list L104, and the 4WEEK list L105.

First, the access frequency output unit 40 counts the number of access times of each Web content identification information in the past 24 hours from the access history recorded in the high-frequency access list L102 and creates the 24H list L103. FIG 5A is an example of the 24H list L103 generated by the access frequency output unit 40.

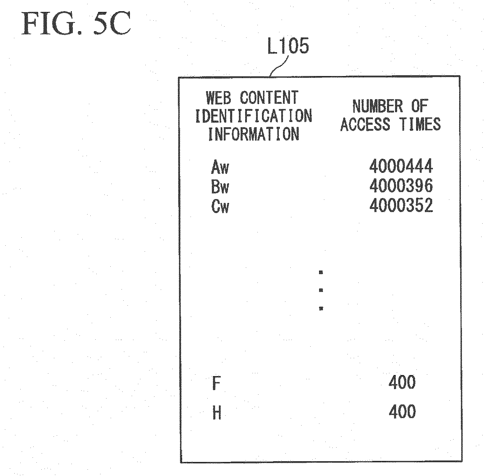

Similarly, the access frequency output unit 40 counts the number of access times of each Web content identification information in the past seven days and creates the 7DAYS list L104. Also, the access frequency output unit 40 counts the number of access times of each Web content identification information in the past four weeks and creates the 4WEEK list L105. FIG. 5B is an example of the 7DAYS list L104 generated by the access frequency output unit 40. FIG. 5C is an example of the 4WEEK list L105 generated by the access frequency output unit 40.

The access frequency output unit 40 records the created 24H list L103, the 7DAYS list L104, and the 4WEEK list L105 in the storage unit 70.

### (Step S5: "Deletion list" creation process)

Next, the deletion target determination unit 50 reads out the 24H list L103, the 7DAYS list L104, and the 4WEEK list L105 from the storage unit 70 and determines the Web contents to be deleted. While referring to FIGS. 5A to 5C, the method in which the deletion target determination unit 50 determines the targets for deletion will be described.

The first line of the 24H list L103 of FIG. 5A shows that there were "10111'' access requests in the past 24 hours for the contents denoted by the Web content identification information "Ah". The contents are listed in the 24H list L103 in the order from those with a high number of access times. The 24H list L103 shows that the Web contents denoted by the Web content identification information "F," "Cd," and "Bw" are contents with the lowest number of access times in the last 24 hours.

The 7DAYS list L104 shows that the contents denoted by "F" and "Cw" are contents with the lowest number of access times in the last seven days. The 4WEEK list L105 shows that the contents denoted by "F" and "H" are contents with the lowest number of access times in the last four weeks. The contents with a low number of access times in these periods are the contents included in the high-frequency access list L102, that is, contents with a low number of access times in each period among the contents currently targeted for cashing.

The deletion target determination unit 50, by reading each list L103 to L105, extracts the contents with a low number of access times in each period. As an example of the method of extraction, using the number of access times, only those contents with a predetermined number of access times or less may be extracted. As another example of the method of extraction, a ranking on the list may be specified, and contents whose number of access times is equal to or less than the predetermined ranking may be extracted.

Next, the deletion target determination unit 50 selects the contents to be deleted from the extracted candidates for deletion. A description will be given using FIGS 5A to 5C as an example. First, as a result of the extraction, the case will be described of the deletion target determination unit 50 selecting as candidates for deletion "F, "Cd", and "Bw" from the 24H list L103, "F" and "Cw" from the 7DAYS list L104, and "F" and "H" from the 4WEEK list L105.

Next, the deletion target determination unit 50 determines the deletion targets from the extracted deletion candidates. Specifically, the deletion target determination unit 50 makes those contents of the deletion candidates deletion targets if their access frequency is not high on all three lists.

First, the deletion target determination unit 50 examines "F". In all of the lists, the number of access times for "F" is the lowest rank. Accordingly, the deletion target determination unit 50 determines to make "F" a deletion target. Next, the deletion target determination unit 50 examines "Cd". In the 24H list L103, "Cd" is at the lowest rank, but in the 7DAYS list L104, its number of access times is the third highest. That is, in the last 24 hours, "Cd" was not accessed much, but it is content that has been accessed a lot over the past seven days. The deletion target determination unit 50 judges that this kind of content has a high possibility of being accessed above a certain amount again in the future (for example, next week), and therefore determines to not make "Cd" a deletion target. Next, the deletion target determination unit 50 examines "Bw" and "Cw". "Bw" is at the lowest rank in the 24H list L103. "Cw" is at the lowest rank in the 7DAYS list L104. However, in the 4WEEK list L105, "Bw" and "Cw" are among the contents with the highest rank. The deletion target determination unit 50 judges "Bw" and "Cw" as being contents having a given amount of access in a four-week period (month unit) and therefore access above a certain amount again next month can be expected, and therefore determines to not make "Bw" and "Cw" deletion targets.

In this way, in the first exemplary embodiment, cash data with a low access frequency is deleted based on the access frequencies in different periods of the past. For this reason, for example, contents with an access rate that is not high over the last 24 hours but which can be expected to be high over a seven-day period are not deleted. That is, it is possible to efficiently perform selecting and discarding of a new content group that propagates in a short time and the existing cash.

Next, the deletion target determination unit 50 examines "H". "H" has the lowest ranking number of access times in the 4WEEK list L105. The deletion target determination unit 50 determines whether or not to make this "H" a deletion target on the basis of the judgment criterion of how much access determined beforehand in the 24H list L103 and the 7DAYS list L105 means the access frequency is regarded as high. Also, if there has been no access to the Web contents that this "H" denotes within the latest seven-day period, "H" is judged by the deletion target determination unit 50 to have no record in the 24H list L103 and the 7DAYS list L105. In that case, the deletion target determination unit 50 determines "H" to be a deletion target.

In this way, the deletion target determination unit 50 establishes a reference for the lower limit of the number of access times, and extracts the contents whose number of access times is less than that lower limit reference. Also, the deletion target determination unit 50 establishes a reference for the upper limit of access times. The deletion target determination unit 50 decides whether or not the number of access times in another access frequency list for contents extracted as contents whose number of access times is less than the lower limit reference exceeds the upper limit reference of the number of access times set in that other access frequency list. Also, the deletion target determination unit 50 decides whether or not contents whose number of access times is less than that lower level reference are recorded in other access frequency lists. For Web contents whose number of access times is low on any access frequency list, the deletion target determination unit 50 determines that Web contents to be a deletion target if the number of access times of that Web contents does not exceed the upper limit reference in any other access frequency list, or that Web contents is not recorded on any other access frequency list.

The deletion target determination unit 50 repeats this procedure of determining deletion targets until the size of the data to be deleted is equal to or greater than the size of the data to be added.

Specifically, the deletion target determination unit 50 reads out from the storage unit 70 the data size required for contents to be newly cashed that the high-frequency access list creation unit 30 has calculated (additional data size). Also, the deletion target determination unit 50 reads out from the storage unit 70 the data size of the Web contents already determined as deletion targets (the contents denoted by "F" in FIGS. 5A to 5C), and calculates the total of that read-out data size (deletion data size). The deletion target determination unit 50 compares the additional data size and the deletion data size, and repeats the aforementioned deletion target determination procedure until the deletion data size reaches the additional data size.

The deletion target determination unit 50 may increase the number of contents to be extracted as contents whose number of access times is low by raising the lower limit reference in accordance with the number of repetitions of the determination procedure, and with the same procedure determine deletion targets. As another method, the deletion target determination unit 50 may leave the lower limit reference as is, and by raising the upper limit reference of the number of access times in accordance with the number of repetitions of the determination procedure, reduce the number of contents to be excluded from deletion candidates, and determine deletion targets again by the same procedure.

When the determination of deletion targets is completed, the deletion target determination unit 50 creates the deletion list L106 showing the Web content identification information of the Web contents targeted for deletion. Moreover, the deletion target determination unit 50 transmits the deletion list L106 to the distribution server device 2 via the communication unit 60. Also, the deletion target determination unit 50 outputs the deletion list L106 to the high-frequency access list creation unit 30. The high-frequency access list creation unit 30 deletes the Web content identification information recorded in the deletion list L106 from the high-frequency access list L102.

With the above, the present processing flow ends.

In this way, the deletion target determination unit 50 determines the Web contents to be deleted from the cash data from the standpoint of leaving only the Web contents with a high access frequency over a plurality of periods of differing lengths in the past with the present set as a reference. In this way, by considering the access frequencies in different periods whose lengths are set in multiple stages, it is possible to generate cash data based on access trends of patterns that differ in accordance with the length of the period. The number of accesses which a communication network of a communications carrier receives is huge. For this reason, when the general method of cashing accessed Web contents and deleting old cash data one after another is used, cash data may be replaced in a very short period (for example, several minutes). In such a case, the operation of a distribution server device may run the danger of being overwhelmed by generation of cash data without being able to raise hit rates. By contrast, according to the present exemplary embodiment, cash data is generated by grasping access trends over a long period from the standpoint of differing periods such as daily, weekly, monthly without being bound by just the latest access, and accumulating only those Web contents that are meaningful to cash. As a result, it is possible to generate cash data of a small data size and a high hit rate.

When the high-frequency access list L102 is updated, and the deletion of the cash data listed in the deletion list L106 is completed in the distribution server device 2, the cash management device 1 manages the contents accumulated in the distribution server device 2 in accordance with the updated high-frequency access list L102 as described in FIG. 3.

According to the present exemplary embodiment, the effect is obtained of being able to accumulate the cash data of Web contents having a high hit rate in a limited storage capacity. Thereby, a communications carrier can raise the utilization ratio of the line network it provides.

The cash management device 1 described above has a computer inside. The process of each process of the cash management device 1 described above is stored in a computer-readable recording medium in the form of a program. By the computer reading and executing this program, the aforementioned processes are performed. A computer-readable recording medium includes a magnetic disk, an optical-magnetic disk, a CD-ROM, a DVD-ROM, a semiconductor memory, and the like. Also, this computer program may be distributed to computers over communication lines, and a computer that has received this distribution may execute that program.

Also, the aforementioned program may be one for realizing a portion of the above-described functions. It may also be a so-called differential file (differential program), which can implement the functions discussed above in combination with a program already stored in the computer system.

In addition, in the range not departing from the scope of the present invention, it is possible to replace the constituent elements in the exemplary embodiments described above with well-known constituent elements. Also, the technical scope of this invention is not limited to the aforementioned exemplary embodiments, and it is possible to make various changes within the scope that does not depart from the scope of the present invention.

A portion or all of the above-described exemplary embodiments may also be described as in the following supplementary notes, but it not limited to the following.
(Supplementary note 1) A cash management device including: a latest access list acquisition unit that acquires a latest access list showing a history of a Web content accessed within a predetermined period of past for which present is set as a reference; and a deletion target determination unit that determines a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data, wherein the deletion target determination unit specifies a Web content whose access frequency is lower than a lower limit reference for each of a plurality of different periods, and selects the deletion target Web content from the specified Web content.
(Supplementary note 2) The cash management device according to supplementary note 1, wherein the deletion target determination unit excludes, from the deletion target, a Web content whose access frequency in any of the plurality of different periods is higher than an upper limit reference.
(Supplementary note 3) The cash management device according to supplementary note 1 or supplementary note 2, wherein the latest access list is an access list showing a Web content accessed a predetermined number of times or more in the predetermined period.
(Supplementary note 4) The cash management device according to any one of supplementary note 1 to supplementary note 3, wherein the deletion target determination unit determines the deletion target so that a total of a data size of the deletion target Web content becomes equal to or greater than a total of a data size of a Web content that is to be added to the high-frequency access list and is to be newly accumulated in the distribution server device among the Web content shown by the latest access list.
(Supplementary note 5) The cash management device according to any one of supplementary note 1 to supplementary note 4, wherein the plurality of different periods include past 24 hours and past seven days for which the present is set as the reference.
(Supplementary note 6) A cash management method including: acquiring a latest access list showing a history of a Web content accessed within a predetermined period of past for which present is set as a reference; and determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data, wherein the determining the deletion target list includes specifying a Web content whose access frequency is lower than a lower limit reference for each of a plurality of different periods, and selecting the deletion target Web content from the specified Web content.
(Supplementary note 7) A program that causes a computer of a cash management device to execute: acquiring a latest access list showing a history of a Web content accessed within a predetermined period of past for which present is set as a reference; and determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data, wherein the determining the deletion target list includes specifying a Web content whose access frequency is lower than a lower limit reference for each of a plurality of different periods, and selecting the deletion target Web content from the specified Web content.

This application is based upon and claims the benefit of priority from Japanese patent application No. 2013-266917, filed on December 25, 2013, the disclosure of which is incorporated herein in its entirety by reference.

### INDUSTRIAL APPLICABILITY

The present invention may be applied to a cash management device, a cash management method, and a program.

### Reference Symbols

- 1:: Cash management device
- 2:: Distribution server device
- 3:: User terminal device
- 4:: Content providing source server device
- 5:: Communication network
- 10:: Total latest access list creation unit
- 20:: Latest access list acquisition unit
- 30:: High-frequency access list creation unit
- 40:: Access frequency output unit
- 50:: Deletion target determination unit
- 60:: Communication unit
- 70:: Storage unit
- L100:: Total latest access list
- L101:: Latest access list
- L102:: High-frequency access list
- L104:: L103: 24H list 7DAYS list L105: 4WEEK list
- L106:: Deletion list

## Claims

1. A cash management device comprising:
a latest access list acquisition unit that acquires a latest access list showing a history of a Web content accessed within a predetermined period of past for which present is set as a reference; and
a deletion target determination unit that determines a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data,
wherein the deletion target determination unit specifies a Web content whose access frequency is lower than a lower limit reference for each of a plurality of different periods, and selects the deletion target Web content from the specified Web content.

2. The cash management device according to claim 1, wherein the deletion target determination unit excludes, from the deletion target, a Web content whose access frequency in any of the plurality of different periods is higher than an upper limit reference.

3. The cash management device according to claim 1 or claim 2, wherein the latest access list is an access list showing a Web content accessed a predetermined number of times or more in the predetermined period.

4. The cash management device according to any one of claim 1 to claim 3, wherein the deletion target determination unit determines the deletion target so that a total of a data size of the deletion target Web content becomes equal to or greater than a total of a data size of a Web content that is to be added to the high-frequency access list and is to be newly accumulated in the distribution server device among the Web content shown by the latest access list.

5. The cash management device according to any one of claim 1 to claim 4, wherein the plurality of different periods include past 24 hours and past seven days for which the present is set as the reference.

6. A cash management method comprising:
acquiring a latest access list showing a history of a Web content accessed within a predetermined period of past for which present is set as a reference; and
determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data,
wherein the determining the deletion target list includes specifying a Web content whose access frequency is lower than a lower limit reference for each of a plurality of different periods, and selecting the deletion target Web content from the specified Web content.

7. A program that causes a computer of a cash management device to execute:
acquiring a latest access list showing a history of a Web content accessed within a predetermined period of past for which present is set as a reference; and
determining a deletion target Web content, the deletion target Web content being a Web content that should be deleted from a high-frequency access list when a Web content is added to the high-frequency access list based on the latest access list, the high-frequency access list showing a Web content that a distribution server device should accumulate as cash data,
wherein the determining the deletion target list includes specifying a Web content whose access frequency is lower than a lower limit reference for each of a plurality of different periods, and selecting the deletion target Web content from the specified Web content.
